# EUROPEAN PATENT SPECIFICATION

(11) **EP 4 059 147 B1**
(45) Date of publication and mention of the grant of the patent: **08.04.2026**
(21) Application number: 19952752.4
(22) Date of filing: 12.11.2019
(51) Int. Cl.: H04B 3/26, H04B 3/56, H04N 7/14, H04N 21/61, H04N 21/236

(54) **A CHOKE**
DROSSEL
BOBINE D'ARRÊT

(43) Date of publication of application: 21.09.2022
(73) Proprietor: Teleste Networks Oy, 20660 Littoinen (FI)
(72) Inventor: KATEVUO, Ville, 21360 Lieto As (FI); VIILI, Ari, 21420 Lieto (FI)
(74) Representative: Berggren Oy
(86) International application number: PCT/FI2019/050802
(87) International publication number: WO 2021/094643

(56) References cited:
- GB-A- 609 708
- US-A- 5 483 208
- US-A- 6 094 110
- US-A1- 2002 080 002
- US-B1- 6 339 364
- US-B1- 6 703 910

## Description

### Field of the invention

The invention relates to chokes, and especially to power chokes used in cable television (CATV) network elements.

### Background of the invention

CATV networks may be implemented with various techniques and network topologies, but currently most cable television networks are implemented as so-called HFC networks (Hybrid Fiber Coax), i.e. as combinations of a fibre network and a coaxial cable network. Typically, most of the network elements attached to the coaxial cables network segments obtain their power supply voltage through the coaxial cable. In other words, the coaxial cable network segments are provided with, besides the RF signals carrying TV and data signals at the frequencies of 5 - 1200 MHz or even more, but also AC power signal (typically 50 Hz) having a voltage of approximately 30 - 90 V.

Power chokes are used in the various network elements attached to the coaxial cable network segments. Typically, a power choke comprises a number of windings of a conductor around a magnetic core to form coils. In the input of network element, a power choke separates the RF signal from the AC power signal by applying a low impedance to the AC power signal while applying a high impedance to the RF signal. Thus, the power choke passes the AC power signal through the choke while blocking the broadband RF signal to RF signal paths of the network element. Another power choke may be used in the output of the network element for combining an amplified RF signal with an AC power signal, wherein the combined signal is supplied to the next network element along the coaxial cable line.

Designing a power choke for CATV systems is a trade-off between a plurality of at least partly conflicting requirements. A good power choke should offer an RF port with small enough insertion loss and high enough return loss, thereby being as transparent as possible, and good hum modulation characteristics. Improving one of said properties easily leads to degradation of one or more another property.

Data Over Cable Service Interface Specification (DOCSIS) is a CATV standard providing specifications for high-bandwidth data transfer in an existing CATV system. The development of DOCSIS will require expanding the upper frequency edge of the RF signals to 1.8 GHz, and eventually even over 3 GHz, or even higher frequencies.

It has turned out that the traditionally designed power chokes do not perform adequately at high frequencies of the RF signal, but when approaching 2 GHz frequencies, they extract the RF signal power at the higher frequencies. In other words, the content of the RF signal in higher frequencies (close to 2 GHz and higher) is not properly, or even at all, supplied to the RF signal paths of the network element.

US 6,339,364 discloses a choke that includes a ferromagnetic core having first and second end portions which may be of equal or unequal diameters. A plurality of turns of a conductor encircle the first and the second portions of the core. The windings of the first and second portions of the core be separated by predetermined distances which provides better frequency response at higher frequencies.

### Brief summary of the invention

The present invention is defined by the attached independent claims. Other preferred embodiments may be found in the dependent claims. The present application discloses a choke (200) comprising a ferrite core (202) having a first diameter (204); a conductor (206) wound around the core (202) into a plurality of windings characteristic to a first frequency range of the RF signals, wherein a first end (206a) of said windings is aligned with a first end (202a) of the core; characterized in that a subset (206b) of said windings, from a second end of said windings, extends beyond a second end (202b) of the core, for extending an upper frequency edge of the first frequency range.

### Brief description of the drawings

The invention will now be described in more detail in connection with preferred embodiments with reference to the appended drawings, in which:
- Fig. 1: shows the general structure of a typical HFC network;
- Fig. 2a: shows an example of a power choke according to a first embodiment;
- Fig. 2b: shows an example of a power choke according to a second embodiment; and
- Fig. 3: shows an exemplified circuit diagram of a CATV network element according to an embodiment.

### Detailed description of the embodiments

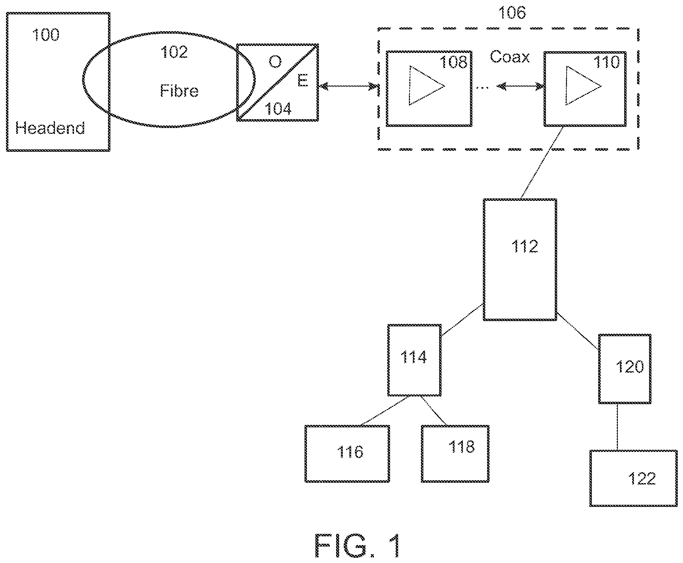

Figure 1 shows the general structure of a typical HFC network. Program services (i.e. RF signals) are introduced from the main amplifier 100 (a so-called headend) of the network via an optical fibre network 102 to an optical node 104, which converts the optical signal to an electric RF signal to be relayed further in a coaxial cable network 106. Typically, the optical node 104 also receives an AC power signal from an AC power supply. The optical node 104 then combines the RF signal and the AC power signal, and transmits the combined signal to the coaxial cable network 106.

Depending on the length, branching, topology, etc. of the coaxial cable network, this coaxial cable segment typically comprises one or more broadband amplifiers 108, 110 for amplifying program service signals in a heavily attenuating coaxial media. From the amplifier the program service signals are introduced to a cable network 112 of a smaller area, such as a distribution network of an apartment building, which are typically implemented as coaxial tree or star networks comprising signal splitters for distributing the program service signals to each customer. The cable network 112, such as the distribution network of an apartment, may further comprise a Network Interface Unit (NIU) arranged to divide downstream signals to appropriate home appliances. The NIU may operate as a home amplifier. From a wall outlet the signal is further relayed either via a cable modem 114 to a television receiver 116 or a computer 118, or via a so-called set-top box 120 to a television receiver 122.

Data Over Cable Service Interface Specification (DOCSIS) is a CATV standard providing specifications for high-bandwidth data transfer in an existing CATV system. DOCSIS may be employed to provide Internet access over existing HFC infrastructure of cable television operators. DOCSIS has been evolved through versions 1.0, 1.1, 2.0 and 3.0 to the latest version of 3.1.

DOCSIS 3.1 specification provides the concept of Distributed CCAP Architecture (DCA), which may also be referred to as Distributed Access Architecture (DAA). Converged Cable Access Platform (CCAP) may be defined as an access-side networking element or set of elements that combines the functionality of a CMTS with that of an Edge QAM (i.e. the modulation), providing high-density services to cable subscribers. Conventionally, the CCAP functionalities have been implemented in the headend/hub, such as the headend 100 in Figure 1. In a DCA, some features of the CCAP are distributed from headend/hub to the network elements closer to the customers, for example to the optical nodes 104 or the broadband amplifiers 108, 110 in Figure 1. DOCSIS 3.1 specifies at least two network element concepts, i.e. a Remote PHY Device (RPD) and a Remote-MACPHY Device (RMD), to which some functionalities of the headend can be distributed. A recent version of DOCSIS 3.1 specification also provided Annex F introducing a Full Duplex DOCSIS 3.1 technology, where a new distributed access node called Full Duplex (FDX) Node is determined. These network elements may be commonly referred to as DCA nodes.

Typically, most of these network elements connected to the coaxial cable segments of the HFC network, such as amplifiers, DCA nodes, and NIUs, obtain their power supply voltage from the AC power signal transmitted in the coaxial cable. For extracting the AC power signal from the combined signal, the network elements typically comprise a power choke comprising a number of windings of a conductor around a magnetic core to form coils.

Designing a power choke for CATV systems is a multifold task depending on a plurality of parameters. For example, the windings of the conductor create self-capacitance in the choke, which combined with the inductance of the choke results in a plurality of LC resonances, possibly causing a loss of RF signal power at the resonance frequencies, thereby distorting the frequency response of the RF signal. If the inductance of the choke is too high, the resonances are created at higher frequencies. The resonances are further affected by thickness of the conductor and the mutual distance of the windings. On the other, too little inductance results in high return loss and insertion loss at low frequencies in RF signal line.

Moreover, depending on the number, type and/or mutual distances of the network elements in the coaxial cable segment to be provided with the AC power signal, the current associated with the AC power signal may vary approximately between 3 - 15 A. The used current sets requirements for the strength and properties of the conductor used in the coil, as well as for the heat dissipation properties of the choke, which is typically proportional to the thickness of the conductor. On the other hand, high currents may cause the core material to approach its magnetic saturation, which may result in distortion of the RF signal, i.e. degradation of the hum modulation characteristics of the choke.

Thus, there is a trade-off between a plurality of at least partly conflicting requirements, wherein improving one parameter easily leads to degradation of at least one other parameter.

The development of DOCSIS will require expanding the upper frequency edge of the RF signals to 1.8 GHz, and eventually even over 3 GHz. It has turned out that the traditionally designed power chokes, which perform well e.g. within 5 - 1200 MHz frequencies, do not perform adequately at higher frequencies of the RF signal. Especially, when approaching 2 GHz frequencies, such power chokes extract the RF signal power at the higher frequencies. This is partly due to the resonances, which in traditionally designed power chokes appear somewhat above 1,2 GHz. Another reason is that the core and the coil become less matching in said higher frequencies, wherein the choke becomes from an inductive load more into a capacitive load as a function of the increasing frequency. This causes attenuation of the RF signal at the higher frequencies. In other words, the content of the RF signal in higher frequencies (close to 2 GHz and higher) is not properly, or even at all, supplied to the RF signal paths of the network element.

Therefore, an improved choke is needed for enabling to receive higher frequency RF signals adequately.

According to an aspect, there is provided a power choke comprising a ferrite core having a first diameter; a conductor wound around the core into a plurality of windings characteristic to a first frequency range of the RF signals, wherein a first end of said windings is substantially aligned with a first end of the core and a subset of said windings, from a second end of said windings, extends beyond a second end of the core or surrounds a length of the second end of the core, wherein said length of the second end of the core has a second smaller diameter, for extending an upper frequency edge of the first frequency range.

Hence, by shortening the length of the ferrite core or by decreasing the diameter of the second end of the ferrite core in a power choke operating well within a first frequency range of the RF signals, such as 5 - 1200 MHz, thereby either leaving a subset of the windings of the conductor without the core inside the windings or providing the subset of the windings with a section of core having a smaller diameter, the upper frequency edge of the RF signals may be raised significantly.

The removal of the core from inside of the subset of the windings reduces the inductance of the coil and changes the frequency response of the reactance of the choke from inductive to capacitive as a function of increasing frequency. In other words, the LC resonance frequencies move to even higher frequency ranges, and the non-matching behavior of the core and the coil on the desired higher frequencies is reduced or even totally removed.

Decreasing the diameter of the second end of the ferrite core provides the same technical effect, even though the reduction of the inductance is more moderate, as well as the shift of the LC resonance frequencies to higher frequency ranges.

It is noted that, even though the examples described herein illustrate power chokes operating within frequency ranges typical to CATV systems, such as from a few MHz to a few GHz, the above principle is generally applicable to the design of any power choke: a power choke designed to operate on a predetermined frequency range of the RF signals may be configured to operate on an extended frequency range of the RF signals, where the upper frequency edge of the RF signals is raised significantly, by using a shorter ferrite core or a ferrite core having a second end with a smaller diameter.

While the modification may decrease the performance of the power choke on the lowest RF frequencies, such as 5 - 20 MHz, the benefits gained through the significantly increased transmission capacity of the RF signals on the higher frequencies, such as above 2 GHz, more than compensates for this.

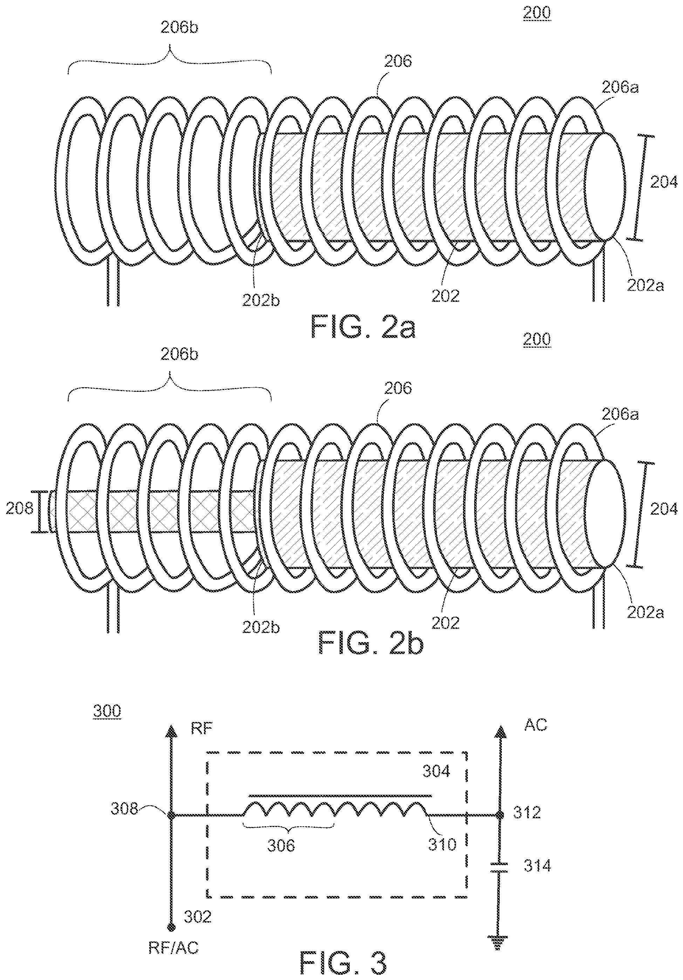

Hence, the same technical effect can be achieved by two embodiments, and an example of a power choke according to a first embodiment is illustrated in Figure 2a. The power choke 200 comprises a ferrite core 202 having a first diameter 204 and a conductor 206 wound around the core into a plurality of windings characteristic to a first frequency range of the RF signals, wherein a first end 206a of said windings is substantially aligned with a first end 202a of the core and a subset 206b of said windings, from a second end of said windings, extends beyond a second end 202b of the core.

An example of a power choke according to a second embodiment is illustrated in Figure 2b. The structure of the power choke according to the second embodiment is almost similar to that of the power choke according to the first embodiment: The power choke 200 comprises a ferrite core 202 having a first diameter 204 and a conductor 206 wound around the core into a plurality of windings characteristic to a first frequency range of the RF signals, wherein a first end 206a of said windings is substantially aligned with a first end 202a of the core. However, as a difference to first embodiment, in the power choke according to the second embodiment the subset 206b of said windings, from a second end of said windings, surrounds a length 202c of the second end of the core, wherein said length 202c of the second end of the core has a second smaller diameter 208.

It is noted that in the power choke according to the second embodiment, the phrasing "a first end 206a of said windings is substantially aligned with a first end 202a of the core" shall be interpreted within the variation introduced by the term "substantially aligned". Therein, the whole length of the ferrite core may be a slightly (e.g. one or a few millimeters) longer than the total length of the windings, whereby the desired LC resonances may be adjusted by the positioning of the ferrite core. Thus, the ferrite core 202, especially its first end 202a, may slightly extend, e.g.by one or a few millimeters, beyond the first end 206a of said windings.

In practical implementations, provided that the structure of the power choke otherwise remains the same, the selection between said embodiments may be made based on desired shift of the upper frequency edge of the RF signals, on one hand, and the importance of the performance of the power choke on the lowest RF frequencies, such as 5 - 20 MHz, on the other hand. The first embodiment enables to achieve a higher upper frequency edge of the RF signals, but it may decrease the performance of the power choke on the lowest RF frequencies more severely. The second embodiment, in turn, cannot achieve as high shift of upper frequency edge of the RF signals as the first embodiment, but it causes a more modest drop in the performance on the lowest RF frequencies. Consequently, if the second embodiment provides sufficient shift of the upper frequency edge of the RF signals, it may be considered more advantageous due to slighter negative effect on the lowest RF frequencies.

According to another aspect, there is provided a CATV network element comprising an input terminal for connecting the CATV network element to a cable carrying an AC power signal and RF signals; a power choke comprising a ferrite core having a first diameter; a conductor wound around the core into a plurality of windings characteristic to a first frequency range of the RF signals, wherein a first end of said windings is substantially aligned with a first end of the core and a subset of said windings, from a second end of said windings, extends beyond a second end of the core or surrounds a length of the second end of the core, wherein said length of the second end of the core has a second smaller diameter, for extending an upper frequency edge of the first frequency range; wherein the first end of said windings is connected to a node forwarding the AC power signal and the second end of said windings is connected to a beginning of a RF signal path within said CATV network element.

Such CATV network element is illustrated in an exemplified circuit diagram of Figure 3. The network element 300 comprises an input terminal 302 for the input of the combined AC power signal and RF signals. The power choke 304 according to the embodiments is connected such said subset 306 of said windings, which either extends beyond a second end of the core or surrounds a length of the second end of the core having smaller diameter, is connected to a beginning of a RF signal path 308 within the CATV network element 300. The first end 310 of said windings is connected to a node 312 forwarding the AC power signal to the CATV network element 300. The CATV network element 300 may further comprise a capacitor 314 for guiding the RF signal effectively to ground 316 and for providing an open circuit for the AC power signal.

Thus, by connecting the power choke to an input of the CATV network element such that the second end of said windings, i.e. the end comprising the subset of the windings of the conductor either without the core or with the second end of the core having a decreased diameter inside the windings, is connected to the beginning of the RF signal path within said CATV network element, the RF signal path may be provided with RF signals on the extended frequency range, such as 5 - 3000 MHz and beyond, having an extended upper frequency edge of the RF signals.

In the following, various design options for the parameters and properties of the power choke are disclosed. As is evident from what is stated above, the design of a power choke is a trade-off between a plurality of properties and parameter values, and fixing one property or parameter value typically restricts the choices for other properties and parameter values. The parameter values and properties of the power choke disclosed herein may be applied to the power chokes according to the both embodiments disclosed in figures 2a and 2b, unless other
According to an embodiment, the number of said plurality of windings is from 10 to 20. In other words, the total number of windings of the choke is selected according to the desired inductance, naturally bearing in mind that the properties of the core also contribute to the inductance. When designing a power choke for operating in the frequency ranges typical to CATV systems, the total number of windings of the choke typically varies between 10 - 20.

According to an embodiment, said subset of windings comprises approximately 10 - 50 %, more preferably 20 - 35 % of a total number of said plurality of windings. For example, if the total number of windings of the choke is selected as 20, due to the desired inductance, for achieving the technical effect of extending the upper frequency edge of the RF signals, approximately 2 - 10, more preferably 4 - 7 windings, from the second end of said windings, either extends beyond the second end of the core or surrounds a second part of core having smaller diameter.

According to an embodiment, said core comprises a plurality of ferrite rings arranged in a form of a ferrite rod. Thus, the core is preferably in a form of rod or a bar, wherein the rod is composed of a plurality of ferrite rings (a.k.a. ferrite beads). The various sizes of ferrite rings available on the market facilitate the selection of core parameters to be compatible with other parameters on the choke, as explained below.

According to an embodiment, said ferrite rings are galvanically separated from each other. The galvanic separation reduces the risk of magnetic saturation and therefore improves the hum modulation characteristics of the choke.

According to an alternative embodiment, said core comprises a uniform piece of a ferrite rod. This can be implemented in the embodiment of Figure 2a disclosing the ferrite core 202 having the only first diameter 204, as well as in the embodiment of Figure 2b, where the major part of the core has the first diameter 204, but for the length 202c of the second end of the core, the core has the second smaller diameter 208.

According to an embodiment, the conductor has a thickness from 0.9 mm to 1.6 mm. Herein, the thickness of the conductor may be selected based on the current associated with the AC power signal. For example, if the current associated with the AC power signal is 7 A, an appropriate thickness for the conductor may be 0.9 - 1.0 mm, whereas the current of 15 A may require the thickness of 1.6 mm. It is noted that the properties for heat dissipation and break-through voltages also affect to the selection of the thickness of the conductor.

According to an embodiment, diameter of said plurality of windings is from 6 - 10 mm, more preferably 7 - 8.5 mm.

According to an embodiment, diameter of said subset of windings is increased between consecutive windings from for creating a helicoil structure for said subset of windings. Thus, a so-called helicoil structure may be used for said subset of windings, i.e. for the windings from the second end of said windings, which either extend beyond the second end of the core or surround a second part of core having smaller diameter. Therein, the diameter of the windings, starting from the outermost winding connectable to the beginning of the RF signal path within said CATV network element, is increased, for example stepwise or linearly, for the subsequent winding. If said subset of windings comprises, e.g. 6 windings, the diameter of the windings may be increased, starting from the outermost winding, per winding up to the 6^{th} winding.

It has turned out that the use of the helicoil structure in said subset of windings even further strengthens the effect of moving the LC resonance frequencies to even higher frequency ranges and reducing the non-matching behavior of the core and the coil on the desired higher frequencies. This is due to the winding-specifically changing value of inductance, as well as the values of the capacitance and self-capacitance, of the coil, whereupon a plurality of smaller LC resonances occurs over the coil and no major (multiple) LC resonance occurs at a particular frequency.

According to an embodiment, the first diameter of the core is from 6 - 10 mm, more preferably 7 - 8.5 mm.

According to an embodiment, the second diameter of the core is from 3 - 6 mm, more preferably 4.5 mm
In the following, some implementation examples are disclosed, wherein combinations of the above parameters and properties of the power choke are designed such that the technical effect of increasing the transmission capacity of the RF signals on the higher frequencies than nowadays used in CATV systems is achieved.

In the first example, there is a choke according Figure 2a, i.e. where the subset of said windings, from the second end of said windings, extends beyond a second end of the core and the choke is designed for 7 A current associated with the AC power signal. Therein, the total length of the choke is 23 mm, the thickness of the conductor 1 mm and it comprises 15 windings. The diameter of the core is 7 mm. The length for which the subset of said windings, from the second end of said windings, extends beyond the second end of the core is 4 mm (approximately 3 windings), and thus 19 mm (approximately 12 windings) of the coil surrounds the core. A frequency range of approximately 20 MHz - 4.5 GHz may be achieved with the power choke as defined above.

In the second example, there is a choke according Figure 2b, i.e. where the subset of said windings, from the second end of said windings, surrounds a length of the second end of the core having a second smaller diameter and the choke is designed for 7 A current associated with the AC power signal. Therein, the total length of the windings is 23 mm, the thickness of the conductor 1 mm and it comprises 15 windings. The first diameter of the core is 7 mm and the second diameter of the core is 4.5 mm. Herein, the length of the core 23.7 mm, thus slightly exceeding the length of the windings. The length for which the subset of said windings, from the second end of said windings, surrounds a length of the second end of the core having the second smaller diameter is 4.5 mm (approximately 3 windings), and thus 19.2 mm (approximately 12 windings) of the coil surrounds the core having the larger diameter 7 mm. Thus, approximately 0.7 mm from the first end 202a of the ferrite core 202 extends beyond the first end 206a of said windings. A frequency range of approximately 5 MHz - 3 GHz may be achieved with the power choke as defined above.

The third example is 15 A version of the first example above. Therein, the total length of the choke is 35 mm, the thickness of the conductor 1.6 mm and it comprises 18 windings. The diameter of the core is 8.5 mm. The length for which the subset of said windings, from the second end of said windings, extends beyond the second end of the core is 9 mm (approximately 5 windings), and thus 26 mm (approximately 13 windings) of the coil surrounds the core. The changes in the parameter values compared to the first example are mainly due to requirements set by the higher current, but the achievable frequency range remains the same, i.e. approximately 20 MHz - 4.5 GHz.

The fourth example is 15 A version of the second example above. Therein, the total length of the windings is 35 mm, the thickness of the conductor 1.6 mm and it comprises 18 windings. The first diameter of the core is 8.5 mm and the second diameter of the core is 4.5 mm. Herein, the length of the core 38 mm, thus slightly exceeding the length of the windings. The length for which the subset of said windings, from the second end of said windings, surrounds a length of the second end of the core having the second smaller diameter is 10 mm (approximately 5 windings), and thus 28 mm (approximately 13 windings) of the coil surrounds the core having the larger diameter 8.5 mm. Thus, approximately 3 mm from the first end 202a of the ferrite core 202 extends beyond the first end 206a of said windings. Also here the changes in the parameter values compared to the second example are mainly due to requirements set by the higher current, but the achievable frequency range remains the same, i.e. approximately 5 MHz - 3 GHz.

The fifth example describes a choke according Figure 2a, i.e. where the subset of said windings, from the second end of said windings, extends beyond a second end of the core, and wherein said subset is implemented with a helicoil structure. The choke is designed for 15 A current associated with the AC power signal. Therein, the total length of the choke is 32 mm, the thickness of the conductor 1.6 mm and it comprises 14 windings. The diameter of the core is 8.5 mm. The length for which the subset of said windings, from the second end of said windings, extends beyond the second end of the core is 14.5 mm (approximately 6 windings), and thus 17.5 mm (approximately 8 windings) of the coil surrounds the core. Said subset of windings (6 windings) extending beyond the second end of the core are arranged in a helicoil structure such that the diameter of the windings, starting from the outermost winding, is increased for the subsequent winding such that the sixth, or at least the seventh, winding reaches the diameter of the core. A frequency range of approximately 20 MHz - 4.5 GHz may be achieved with the power choke having the helicoil structure as defined above.

According to an embodiment, the choke further comprises a resistor connected across a second plurality of windings. Thus, a shunt resistor may be connected across a number of windings so as to affect the self-capacitances between the windings. As a result, the quality factor Q of the LC resonance circuit is degraded, making the resonances broader and smaller in the desired RF signal frequency range. Thus, the effect of the resonances is further mitigated.

Considering the CATV network element, according to embodiment said power choke is connected to a printed circuit board (PCB) and a surface layer of said PCB has been removed from substantially an area covered by said power choke. Removing the surface layer beneath the power choke may help to prevent a break-through from the conductor to ground.

## Claims

1. A choke (200) comprising
a ferrite core (202) having a first diameter (204);
a conductor (206) wound around the core (202) into a plurality of windings characteristic to a first frequency range of the RF signals, wherein a first end (206a) of said windings is aligned with a first end (202a) of the core; **characterized in that** a subset (206b) of said windings, from a second end of said windings, extends beyond a second end (202b) of the core, for extending an upper frequency edge of the first frequency range.

2. The choke according to claim 1, wherein the number of said plurality of windings is from 10 - 20.

3. The choke according to claim 1 or 2, wherein said subset of windings comprises approximately 10 - 50 %, more preferably 20 - 35 % of a total number of said plurality of windings.

4. The choke according to any of claims 1 - 3, wherein said core (202) comprises a plurality of ferrite rings arranged in a form of a ferrite rod.

5. The choke according to claim 4, wherein said ferrite rings are galvanically separated from each other.

6. The choke according to any of claims 1 - 3, wherein said core (202) comprises a uniform piece of a ferrite rod.

7. The choke according to any preceding claim, wherein the conductor (206) has a thickness from 0.9 mm to 1.6 mm.

8. The choke according to any preceding claim, wherein diameter of said subset of windings is increased between consecutive windings for creating a helicoil structure for said subset of windings.

9. The choke according to any preceding claim, wherein the first diameter of the core (202) is from 6 - 10 mm, more preferably 7 - 8.5 mm.

10. The choke according to claim 9, wherein a second diameter of the core at the second end of the core is from 3 - 6 mm, more preferably 4.5 mm.

11. The choke according to any preceding claim, further comprising a resistor connected across a second plurality of windings.

12. A CATV network element (300) comprising
an input terminal (302) for connecting the CATV network element to a cable carrying an AC power signal and RF signals;
a choke (200; 304) comprising
a ferrite core (202) having a first diameter (204);
a conductor (206) wound around the core (202) into a plurality of windings characteristic to a first frequency range of the RF signals, wherein a first end (206a) of said windings is aligned with a first end (202a) of the core and a subset (206b; 306) of said windings, from a second end of said windings, extends beyond a second end (202b) of the core, for extending an upper frequency edge of the first frequency range;
wherein the first end (310) of said windings is connected to a node (312) forwarding the AC power signal and the second end of said windings is connected to a beginning of a RF signal path (308) within said CATV network element.

13. The CATV network element according to claim 12, wherein said choke is connected to a printed circuit board (PCB) and a surface layer of said PCB has been removed from an area covered by said choke.

14. The CATV network element according to claim 12 or 13, comprising the choke according to any of claims 2 -11.

## Patentansprüche

1. Drossel (200), umfassend
einen Ferritkern (202) mit einem ersten Durchmesser (204);
einen Leiter (206), der um den Kern (202) zu einer Vielzahl von Wicklungen gewickelt ist, die für einen ersten Frequenzbereich der HF-Signale charakteristisch sind, wobei ein erstes Ende (206a) der Wicklungen mit einem ersten Ende (202a) des Kerns ausgerichtet ist; **dadurch gekennzeichnet, dass** sich ein Teilsatz (206b) der Wicklungen von einem zweiten Ende der Wicklungen über ein zweites Ende (202b) des Kerns hinaus erstreckt, um eine obere Grenzfrequenz des ersten Frequenzbereichs zu erweitern.

2. Drossel nach Anspruch 1, wobei die Anzahl der Vielzahl von Wicklungen zwischen 10 und 20 liegt.

3. Drossel nach Anspruch 1 oder 2, wobei der Teilsatz von Wicklungen etwa 10-50 %, vorzugsweise 20-35 %, der Gesamtzahl der Vielzahl von Wicklungen umfasst.

4. Drossel nach einem der Ansprüche 1 bis 3, wobei der Kern (202) eine Vielzahl von Ferritringen umfasst, die in Form eines Ferritstabes angeordnet sind.

5. Drossel nach Anspruch 4, wobei die Ferritringe galvanisch voneinander getrennt sind.

6. Drossel nach einem der Ansprüche 1 bis 3, wobei der Kern (202) ein gleichmäßiges Stück eines Ferritstabes umfasst.

7. Drossel nach einem der vorstehenden Ansprüche, wobei der Leiter (206) eine Dicke von 0,9 mm bis 1,6 mm aufweist.

8. Drossel nach einem der vorstehenden Ansprüche, wobei der Durchmesser des Teilsatzes von Wicklungen zwischen aufeinander folgenden Wicklungen vergrößert wird, um eine spiralförmige Struktur für den Teilsatz von Wicklungen zu erzeugen.

9. Drossel nach einem der vorstehenden Ansprüche, wobei der erste Durchmesser des Kerns (202) 6-10 mm, vorzugsweise 7-8,5 mm, beträgt.

10. Drossel nach Anspruch 9, wobei der zweite Durchmesser des Kerns am zweiten Ende des Kerns zwischen 3 und 6 mm, weiter bevorzugt 4,5 mm, beträgt.

11. Drossel nach einem der vorstehenden Ansprüche, ferner umfassend einen Widerstand, der über eine zweite Vielzahl von Wicklungen angeschlossen ist.

12. CATV-Netzelement (300), umfassend
einen Eingangsanschluss (302) zum Anschluss des CATV-Netzelements an ein Kabel, das ein Wechselstromsignal und HF-Signale führt;
eine Drossel (200; 304), umfassend
einen Ferritkern (202) mit einem ersten Durchmesser (204);
einen Leiter (206), der um den Kern (202) zu einer Vielzahl von Wicklungen gewickelt ist, die für einen ersten Frequenzbereich der HF-Signale charakteristisch sind, wobei ein erstes Ende (206a) der Wicklungen mit einem ersten Ende (202a) des Kerns ausgerichtet ist und ein Teilsatz (206b, 306) der Wicklungen sich von einem zweiten Ende der Wicklungen über ein zweites Ende (202b) des Kerns hinaus erstreckt, um eine obere Grenzfrequenz des ersten Frequenzbereichs zu erweitern;
wobei das erste Ende (310) der Wicklungen mit einem Knoten (312) verbunden ist, der das Wechselstrom-Leistungssignal weiterleitet, und das zweite Ende der Wicklungen mit einem Anfang eines HF-Signalpfades (308) innerhalb des CATV-Netzwerkelements verbunden ist.

13. CATV-Netzelement nach Anspruch 12, wobei die Drossel mit einer Leiterplatte (PCB) verbunden ist und eine Oberflächenschicht der PCB von einem von der Drossel bedeckten Bereich entfernt wurde.

14. CATV-Netzelement nach Anspruch 12 oder 13, umfassend die Drossel nach einem der Ansprüche 2 bis 11.

## Revendications

1. Bobine d'arrêt (200) comprenant
un noyau de ferrite (202) présentant un premier diamètre (204) ;
un conducteur (206) enroulé autour du noyau (202) en une pluralité de spires caractéristiques d'une première plage de fréquences des signaux RF, dans laquelle une première extrémité (206a) desdites spires est alignée avec une première extrémité (202a) du noyau ; **caractérisée en ce qu'**un sous-ensemble (206b) desdites spires, à partir d'une seconde extrémité desdites spires, s'étend au-delà d'une seconde extrémité (202b) du noyau, pour étendre une limite supérieure de fréquence de la première plage de fréquences.

2. Bobine d'arrêt selon la revendication 1, dans laquelle le nombre de ladite pluralité de spires est de 10 à 20.

3. Bobine d'arrêt selon la revendication 1 ou 2, dans laquelle ledit sous-ensemble de spires comprend environ 10 à 50%, plus préférablement 20 à 35 % du nombre total de ladite pluralité de spires.

4. Bobine d'arrêt selon l'une quelconque des revendications 1 à 3, dans laquelle ledit noyau (202) comprend une pluralité d'anneaux de ferrite disposés sous la forme d'une tige de ferrite.

5. Bobine d'arrêt selon la revendication 4, dans laquelle lesdits anneaux de ferrite sont séparés galvaniquement l'un de l'autre.

6. Bobine d'arrêt selon l'une quelconque des revendications 1 à 3, dans laquelle ledit noyau (202) comprend une pièce uniforme de tige de ferrite.

7. Bobine d'arrêt selon une quelconque revendication précédente, dans laquelle un conducteur (206) présente une épaisseur de 0,9 mm à 1,6 mm.

8. Bobine d'arrêt selon une quelconque revendication précédente, dans laquelle le diamètre dudit sous-ensemble de spires est augmenté entre des spires consécutives pour créer une structure hélicoïdale pour ledit sous-ensemble de spires.

9. Bobine d'arrêt selon une quelconque revendication précédente, dans laquelle le premier diamètre du noyau (202) est de 6 à 10 mm, plus préférablement de 7 à 8,5 mm.

10. Bobine d'arrêt selon la revendication 9, dans laquelle un second diamètre du noyau au niveau de la seconde extrémité du noyau est de 3 à 6 mm, plus préférablement de 4,5 mm.

11. Bobine d'arrêt selon une quelconque revendication précédente, comprenant en outre une résistance reliée aux bornes d'une seconde pluralité de spires.

12. Élément de réseau CATV (300) comprenant une borne d'entrée (302) destinée à relier l'élément de réseau CATV à un câble transportant un signal d'alimentation CA et des signaux RF ;
une bobine d'arrêt (200 ; (304) comprenant :
un noyau de ferrite (202) présentant un premier diamètre (204) ;
un conducteur (206) enroulé autour du noyau (202) en une pluralité de spires caractéristiques d'une première plage de fréquences des signaux RF, dans lequel une première extrémité (206a) desdites spires est alignée avec une première extrémité (202a) du noyau et un sous-ensemble (206b ; 306) desdites spires, à partir d'une seconde extrémité desdites spires, s'étend au-delà d'une seconde extrémité (202b) du noyau, pour étendre une limite supérieure de fréquence de la première plage de fréquences ;
dans lequel la première extrémité (310) desdites spires est reliée à un nœud (312) transmettant le signal d'alimentation CA et la seconde extrémité desdites spires est reliée au début d'un trajet de signal RF (308) au sein dudit élément de réseau CATV.

13. Élément de réseau CATV selon la revendication 12, dans lequel ladite bobine d'arrêt est reliée à une carte de circuit imprimé (PCB) et une couche de surface de ladite PCB a été retirée d'une zone recouverte par ladite bobine d'arrêt.

14. Élément de réseau CATV selon la revendication 12 ou 13, comprenant la bobine d'arrêt selon l'une quelconque des revendications 2 à 11.
